# EUROPEAN PATENT APPLICATION

(11) **EP 3 012 155 A1**
(43) Date of publication of application: **27.04.2016**
(21) Application number: 14189597.9
(22) Date of filing: 20.10.2014
(51) Int. Cl.: B60R 13/08, B60N 3/04

(54) **Main floor part for a small utility vehicle**

(71) Applicant: Autoneum Management AG, 8406 Winterthur (CH)
(72) Inventor: Kossanyi, Mathias, 75010 Paris (FR)
(74) Representative: van Adrichem Geisseler, Johanna

(57) **Abstract**

Device for covering at least partially a vehicle floor pan comprising a sound absorbing material (3) and at least a reinforcing block (5), whereby the reinforcing block is at least partially covered with the sound absorbing material characterised in that at least the lower face of the reinforcing block defines at least a dome shaped protrusion (6).

## Description

### Technical Field

The present invention relates to a device for covering a vehicle floor pan. It relates in particular to a floor device for small utility vehicles or so called mini vans.

### Background Art

Small utility vehicles or so called minivans have a raised floor to hide the protruding floor elements and any cables or channels that are available in the floor pan or on the floor pan. By raising the floor it is possible to obtain a plain level floor space, beneficial for loading the car with goods to be transported.

In a known example of such device, the sound absorbing material is polyurethane foam which covers generally the whole floor pan of the vehicle between a front end located near the pedal assembly mounting and a rear end under the rear bench seat - if available, or up to the back door, sometimes including the trunk area.

Other known floor coverings are developed as a structural load floor covering. In a known device in order to improve the mechanical strength, a device comprising a reinforced block made of expanded polystyrene (EPS) was used. In this device the shape of the block was generally a solid rectangular parallelepiped. In addition these floor coverings have conical feet that raise the floor pan to ensure the contact with the floor. The EPS block is embedded in foam accept for the face of the feet, the area that will make direct contact with the floor pan. The area at the passenger site underneath the carpet top layer contains also foam.

Further known floor coverings contain an injection moulded plastic plate with hollow feet embedded in foam comparable with the floor covering with EPS. In this case the feet are also conical, however they are coverd with foam underneath, ergo the surface between feet and floor pane is covered with foam as well.

The structural load floors have an increased acoustic performance when covered in sound absorbing foam or felt material. However in the case of the known covering with the injection moulded plate, this plate is very thin and therefore a lot of foam is needed to fill the required space around the structure, in addition the hollow feet are further increasing the foam volume needed without a substantial acoustic benefit. Also the plastic plate seems to be saving material, the overall weight of the part is increased considerable.

Both solution use conical feet underneath to carry the load. These feet have the smallest cross section in direct or indirect contact with the floor pan. Therefore the full weight of the part and load will be directed to a small surface in contact with the floor pan. In the first case these feet are not covered with foam and therefore will be giving a squeaking noise. In the case of the coverage with foam, the pressure on the feet contact area will be high and the foam will be flattened or even cut, reducing the acoustic function of the part.

### Summary of invention

The objective of the current invention is to provide for an improved structural load floor that is economical, light weight and that has an enhanced acoustic performance over the life time of the part.

The objective is obtained by the device for covering at least partially a vehicle floor pan with the features of the main claim. The device comprises a sound absorbing material and at least a reinforcing block, whereby the reinforcing block is at least partially covered with the sound absorbing material and whereby at least at the lower face of the reinforcing block at least a dome shaped protrusion is defined.

In particularly by a reinforcing block with domes shaped protrusions at least on the lower surface defined according to the invention, it is possible to obtain a part with reduced vertical deflection under load, without the risk of reducing the acoustic effect of the absorbing material.

Preferably the reinforcing block is made of a low density cellular material for instance at least one of expanded polypropylene (EPP), expanded polyethylene (EPE), expanded polystyrene (EPS) or a mixture of EPS and EPE, commercially known as Piocelan, or rigid polyurethane (rigid PUR) or a combination of these materials. For example the rigid body can be built as a main body with insert in areas that are prone to an increased load under impact, for instance in the area under the shaft of a baby or child seat. The insert is than increasing locally the resistance to a sudden impact.

Preferably the absorbing material is made of a fibrous material or a foam material. For instance a polyurethane foam with a density between 30 and 90 kg.m⁻³.

Surprisingly not only is the acoustic performance of the surrounding foam layer optimised, also the foam flow during the production of the part is more even, giving rise to a better acoustic foam layer.

The dome shape used is preferably a low pitched, shallow dome that is described geometrically as having a circular base and a segmental section.

The domes are evenly spread over the entire surface that would be in contact with the floor pan. By using this shape the contact to the floor pan and the overall weight distribution would be more evenly spread. In addition the dome shape is less critical in the fitting of the floor covering on the floor pan. The conical feet of the prior art have a straight and narrow surface area where the part is in contact with the floor pan. A miss match of the feet with the floor will cause the floor pan to wobble. In case of the dome shaped protrusion the shape will easier follow slight differences due to its shape.

To prevent foam strike through in the top covering layer an additional fibrous nonwoven or textile layer (not shown) can be placed under the covering system. This layer should be chosen such that the foam will be hampered in its flow. Preferably this layer is one of a polyester or polyolefin, polypropylene or polyethylene, nonwoven. The layer can be made of staple fibres or of continuous filament material. Binder can be used when necessary.

The invention is further defined and explained with help of the drawings. The drawing to the description should not be seen as standalone examples but more a further explanation of the features of the inventions and can be used with other features alone or in combination in view of the current invention.

### Brief description of drawings

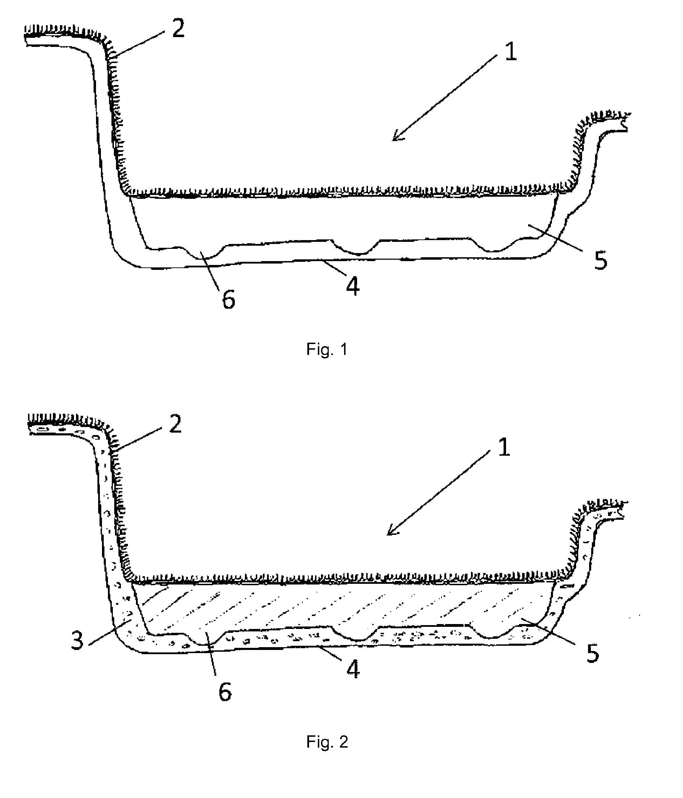

Figure 1 to 6 are showing possible embodiments and examples, whereby the features shown in one example are not necessary all available in a part according to the invention. Particular embodiments or specific additional features can be taken or omitted depending on the actual case at hand.

All figures are using the same reference numbering for same or similar features.

Figure 1 to figure 5 show examples of a floor device 1 covering a floor pan 4 and comprising a reinforcing block 5 with dome shaped protrusion 6 according to the invention.

Figure 1 further shows a covering layer 2, in this case as an example a tufted carpet system. However also other types of material are possible, for instance one of a nonwoven carpet system, a Thermoplastic Polyolefin (TPO) layer or a natural or synthetic rubber layer or a combination of materials mentioned. The choice of material is dependent on the main use of the vehicle, however can also be dependent on regional preferences of the market for the vehicle.

The vehicle floor device as shown in figure 1 has the reinforcing block placed under the carpet and in direct contact with the floor pan. Although this is the cheapest solution and might be applicable in certain instances, there is a large likelihood that the part and or the use of such part in the vehicle will cause a high level of noise insight the compartment. However if the compartment is not occupied by passengers but merely used as a transport area for goods this might not be a problem. The covering layer and the reinforcing block can be connected to each other for instance by a chemical or mechanical bonding, for instance by a lamination or gluing step.

Figure 2 shows the vehicle floor device of figure 1 further comprising an acoustic layer 3 placed between the lower area of the reinforcing block 5 and the floor pan 4. Whereby the full area between the reinforcing block 5 and eventually some overhanging floor covering 2 is preferably filled as shown, with the acoustic absorbing material 3. The acoustic material 3 is shown as an open cell polyurethane foam layer as an example. This can be a slab foam, eventually formed to follow the contours, or it can be foamed directly together with at least the reinforcing block embedded.

Other materials that are able to form an acoustic absorbing and or decoupling layer can be used to form the acoustic material layer 3, for instance a fibrous or felt layer. Preferably the fibrous or felt layer is formed such that it will follow the contour of the floor pan. Preferably the felt layer will embed the reinforcing block, similar to a foam layer applied in a reaction injection moulding layer. For instance fibre laydown machines able to lay fibrous material in 3-D shape would be advantageously used. However also a looser fibrous material that is able to adjust to the form moulded and laminated in a one or two step process can form a layer that follows the contours necessary.

The felt layer is preferable made of shoddy cotton or other fibrous material preferably including a suitable binder. Also fibrous mixtures containing fibrous or foam waste material can be used, eventually combined with virgin fibres.

Although figure 2 is showing the acoustic layer fully embedding the reinforcing block at least for the surface directed towards the floor pan, also less material can be used to achieve at least some noise abatement. At least the areas under the dome shaped protrusion should be covered with an acoustic material, comparable with the material disclosed so far. This can be easily achieved by placing a thin layer of material underneath the part and placing the part on top of it. Alternatively the area is covered with a mat or sheet of absorbing material, glued to the domes and or to the rim of the reinforcing block, so it forms one part and not separate layers, enabling a more easy assemblage of the floor device and the vehicle.

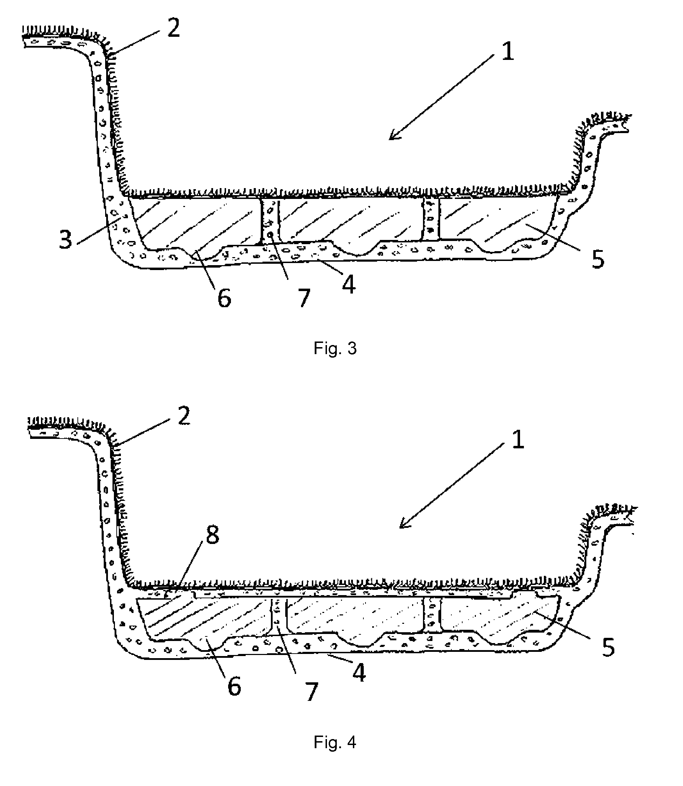

Figure 3 shows the device of figure 2 further comprising channels 7 formed in the reinforcing block 5. These channels are mainly beneficial if the absorbing layer 3 is a foam material that is applied to the device in a reaction injection moulding process step, whereby the reinforcing block is placed in a mould and the foam is applied as a liquid, that reacts in the mould to become a foam, thereby flowing around the reinforcing block and embedding the block in the foam. The foam channels will help in forming a better bond between the foam and the block. It can further help in bonding any of the additional covering layers.

Figure 4 shows the device of figure 3 further showing additional features that can be used alone or in combination.

Firstly the acoustic absorbing layer 3 may also be placed or injected between the top surface of the reinforcing block and the covering system used. This will have a beneficial effect on the overall acoustic performance of the floor device when used in the vehicle. Further it will soften the covering layer slightly, or just enough, to give the passenger a more comfortable feel or it might enable a soft layer to prevent damage to transported goods.

It might also enhance the lamination of the covering system with the other layers in particularly the reinforcing block.

To prevent foam strike through in the top covering layer an additional fibrous nonwoven or textile layer (not shown) can be placed under the covering system. This layer should be chosen such that the foam will be hampered in its flow. Preferably this layer is one of a polyester or polyolefin, polypropylene or polyethylene, nonwoven. The layer can be made of staple fibres or of continuous filament material. Binder can be used when necessary.

For ease of process, it is beneficial to apply the layer to the part together with the absorbing layer underneath, for instance in a one-step foam reaction injection moulding process. However the top acoustic layer can also be applied separately in a process step before or after application of the lower absorbing layer. Furthermore the material between the carpet and the reinforcing layer might be different -materially or functionally- from the material at the lower side of the reinforcing block and facing the floor pan during use.

To ease flow of foam between the covering layer and the reinforcing block the use of spacers (8) might be beneficial. For instance in the form of protrusions in the surface of the reinforcing block or by using spring elements for instance made of plastic which keep a space between the covering layer and the reinforcing block without forming a hard point in the final product. The spring elements can be for instance in the form of plastic loops or half loops perpendicular to the surface of the reinforcing block. These elements can be embedded partly in the reinforcing block to prevent them from moving during the foaming process.

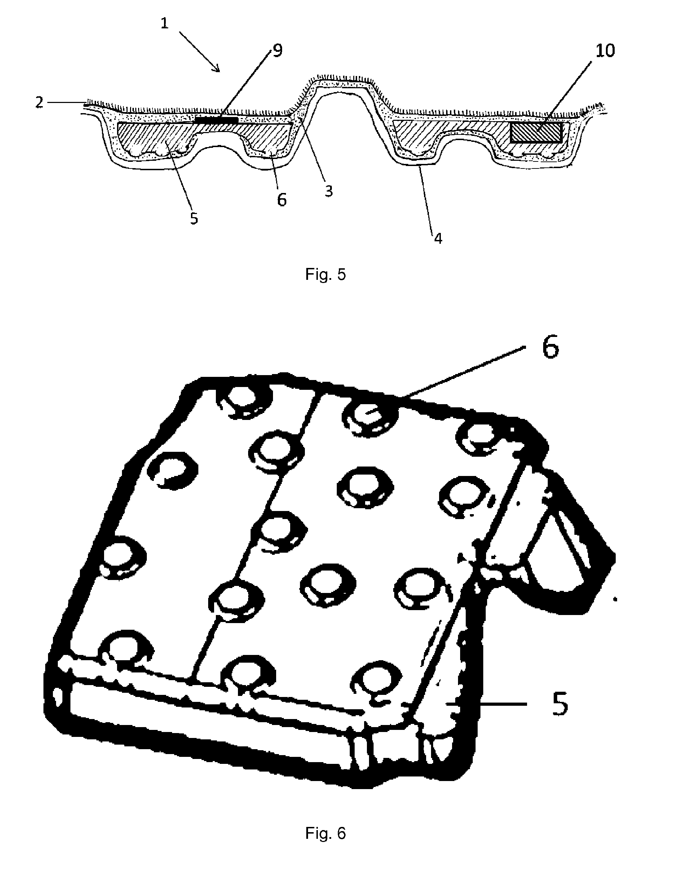

The acoustic performance of the structural floor can be further enhanced by adding a heavy layer patched on between the reinforcing block and the acoustic material layer (Figure 5, 9)

For increasing the local stiffness as might be needed for keeping the shaft of a baby seat and holding it during a crash, it might be necessary to include an insert in the reinforcing block with a higher density than the reinforcing block. (figure 5, 10)

Figure 6 shows the reinforcing block with the domes regularly spaced on the surface of the site that will be facing the floor pan.

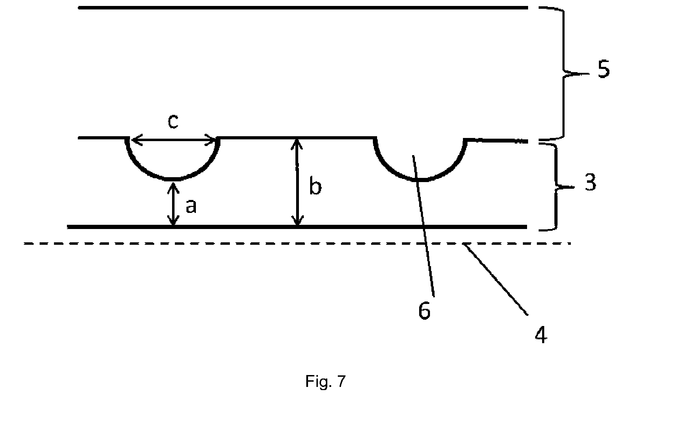

Figure 7 shows the structural load floor schematically to show the dimensions preferred (drawing not to scale). The reinforcing block 5 is embedded in the absorbing layer 3. Preferably the absorbing layer is formed with a thickness (b) of at least 4 mm, preferably between 6 and 8 mm. Whereby the thickness of the absorbing layer underneath the lowest point of the dome is at least 4 mm and preferably between 6 and 8 mm, to achieve an acoustic absorbing effect. However it might be beneficial to fill the space between the reinforcing block and floor pan completely with foam. Preferably the foam is an open cell foam or an porous foam to increase the acoustic performance further.

Although at least the areas of the reinforcing block that would have been in contact with the floor pan should have an absorbing layer between the block and the floor pan, however by filling the space between the whole surface of the reinforcing block and the floor pan with the acoustic material the acoustic properties as well as the load bearing properties can be optimised.

Preferably the load bearing properties of the acoustic absorbing foam should be between 120 and 150 Pa.

## Claims

1. Device for covering at least partially a vehicle floor pan comprising a sound absorbing material and at least a reinforcing block, whereby the reinforcing block is at least partially covered with the sound absorbing material **characterised in that** at least the lower face of the reinforcing block defines at least a dome shaped protrusion.

2. Device according to claim 1, whereby the dome shaped protrusion is a shallow dome having a circular base.

3. Device according to claim 1 or 2, whereby the lower face of the reinforcing block contains dome shaped protrusions evenly spread over its surface.

4. Device according to one of the preceding claims whereby the acoustic material is at least covering the surface including the dome shaped protrusion.

5. Device according to one of the preceding claims whereby the reinforcing block has a lower density as the absorbing material.

6. Device according to one of the preceding claims whereby the reinforcing block is made of a low density cellular material preferably by at least one of expanded polystyrene (EPS), expanded polyethylene (EPE), expanded polypropylene (EPP), a rigid polyurethane or a mixture of EPS and EPE.

7. Device according to one of the preceding claims whereby the acoustic material is a foam material, preferably polyurethane foam.

8. Device according to one of the preceding claims whereby the top face of the reinforcing block facing away from the floor pan is covered with a covering layer preferably with one of a tufted carpet, a nonwoven carpet or a vinyl material.

9. Device according to claim 8 whereby the acoustic material is formed between the covering layer and the reinforcing block.

10. Device according to claim 9 whereby the top face of the reinforcing block means for keeping a distance between the carpet and the reinforcing block are given.

11. Device according to claim 9 whereby the means for keeping a distance are formed by either protrusions from the reinforcing block or by plastic springs placed between the reinforcing block and the covering layer.

12. Device according to claim 8 and claims dependent on it, whereby the acoustic material is foam and the covering layer is a nonwoven or tufted carpet and the part is further comprising an additional layer between the foam and the covering layer to prevent foam strike through.

13. Device according to claim 12 whereby the additional layer is a fibrous nonwoven or textile layer, preferably one of a polyester or a polyolefin material.

14. Device according to one of the preceding claims additionally comprising an insert in the reinforcing block with a higher density than the main body of the block.

15. Device according to claim 14 whereby the insert is made by at least one of expanded polystyrene (EPS),expanded polyethylene (EPE), expanded polypropylene (EPP), a rigid polyurethane or a mixture of EPS and EPE.
